# EUROPEAN PATENT SPECIFICATION

(11) **EP 3 858 207 B1**
(45) Date of publication and mention of the grant of the patent: **12.07.2023**
(21) Application number: 21153755.0
(22) Date of filing: 27.01.2021
(51) Int. Cl.: A47L 9/24

(54) **ADAPTER DEVICE FOR A CORDLESS ELECTRIC VACUUM CLEANER**
ADAPTERVORRICHTUNG FÜR EINEN SCHNURLOSEN ELEKTRISCHEN STAUBSAUGER
DISPOSITIF ADAPTATEUR POUR UN ASPIRATEUR ÉLECTRIQUE SANS FIL

(30) Priority: 28.01.2020 IT 202000001555
(43) Date of publication of application: 04.08.2021
(73) Proprietor: New Ermes Europe S.r.l., 21020 Crosio della Valle (VA) (IT)
(72) Inventor: ROSCHI, Riccardo, 21020 CROSIO DELLA VALLE (VA) (IT)
(74) Representative: Colombo, Stefano Paolo

(56) References cited:
- DE-A1- 2 332 846
- US-A- 4 997 209
- US-B1- 10 443 768

## Description

### BACKGROUND

The present invention relates to the field of vacuum cleaning appliances, such as a vacuum cleaner, an electric broom or a vacuum cleaner, for sucking dust and/or fluids and/or debris from a surface. More particularly, it relates to an adapter device for connecting the motor unit of a wireless electric vacuum cleaner to a flexible tube or to an accessory.

### STATE OF THE ART

In the present description and in the claims, the term "vacuum cleaner" will be used with a wide meaning so as to include all the apparatus, for professional or domestic use, for cleaning by suction. Therefore, the term "vacuum cleaner" will comprise a vacuum cleaner, an electric broom, a so-called vacuum cleaner bin or also an industrial plant of the type in use at car washes or service stations.

Thanks to the performance achieved by electric motors and energy storage batteries, wireless electric brooms have become widespread in recent years. Such apparatuses are very practical and offer high suction performance, even higher than those of traditional wire apparatuses. In fact, such apparatuses are light and, being without a cable for connection to a power outlet, can be used for any area of the working environment, freely and without interruptions. They do not have constraints related to the length of the cable as in wire appliances.

Wireless electric broom manufacturers often feel free to design their own appliances in unusual and unconventional shapes. This is in order to characterize its own devices with respect to those of competitor manufacturers and also to discourage the production of non -original parts and accessories.

Many electric brooms, for example, comprise a main body housing the motor unit, the batteries, the other electrical and electronic components and a container for collecting the sucked dirt. Typically, this main body is connected to a rigid tube which terminates at the bottom at a brush (or suction head).

DE 23 32 846 A1 discloses a vacuum cleaner hose connection.

### SUMMARY OF THE INVENTION

While the use of an electric broom of the above type is very practical, the Applicant has found that it is very difficult, or certainly not practical, to use the electric broom to suck sofas, seats of vehicles or narrow environments (for example drawers or furniture, or the interior of vehicles). It would be equally difficult to use a wireless electric broom with an accessory to brush a pet by sucking the hairs.

There is no possibility of connecting the main body of an electric broom to an accessory directly or through a flexible tube.

Moreover, as mentioned above, the fact that electric broom manufacturers design their products in full freedom often leads to tubes of different cross-section from that of conventional vacuum cleaners, both in terms of shape and size. For example, tubes of quadrangular cross-section are known. This fact often makes it impossible, for example, to connect a standard hose to the main body of a wireless electric broom.

The Applicant has set itself the object of providing a device for connecting an accessory or a hose to the motor unit of a wireless electric broom.

According to a first aspect, the present invention provides an adapter device for a vacuum cleaner comprising a hollow tubular body with a first end configured to engage the main body of the vacuum cleaner and a second end configured to engage an accessory or a flexible hose, wherein said adapter device is at least partially of a resilient material.

According to a first aspect of the invention, there is provided an adapter device for a vacuum cleaner comprising a hollow tubular body comprising a first end configured to engage a part of the vacuum cleaner and a second end configured to engage an accessory or a flexible tube, wherein the hollow tubular body is at least partially of a deformable material with elastic return and comprises a plurality of rings protruding radially outwards from the external surface of the tubular body, wherein the rings of the plurality of rings have an increasing diameter.

According to embodiments, the rings of the plurality of rings have a substantially circular shape.

According to embodiments, the first end is substantially cylindrical with a substantially circular section.

According to embodiments, the second end is at least partially conical.

According to embodiments, the second end which is at least partially conical comprises three substantially conical sections.

According to embodiments, the substantially conical sections have different taper angles.

According to embodiments, the adapter device is made at least partially of a material chosen from the group comprising: natural rubber, synthetic rubber, thermoplastic elastomer, thermoplastic polyurethane, polyvinyl chloride, or any combination thereof.

According to a second aspect, the present invention provides a vacuum cleaner comprising an adapter device as set forth above, wherein the vacuum cleaner is a cordless electric vacuum cleaner or an industrial vacuum cleaner for gas stations or car washes.

According to a third aspect, the present invention provides a kit of parts comprising an adapter device as set forth above and one or more of the following parts: a flexible tube, a rigid nozzle, a brush, a rigid curve, a suction head, a pet grooming tool.

### BRIEF DESCRIPTION OF THE FIGURES

The present invention will become clearer from the following description, given as a non-limiting example, to be read with reference to the enclosed drawings, in which:
- Figure 1 is a first axonometric view of an adapter device according to an embodiment of the present invention;
- Figure 2 is a second axonometric view of the adapter device of Figure 1;
- Figure 3 is a side plan view of the adapter device of Figures 1 and 2;
- Figure 4 is a view from the first end of the adapter device of Figures 1-3;
- Figure 5 is a view from the second end of the adapter device of Figures 1-3; and

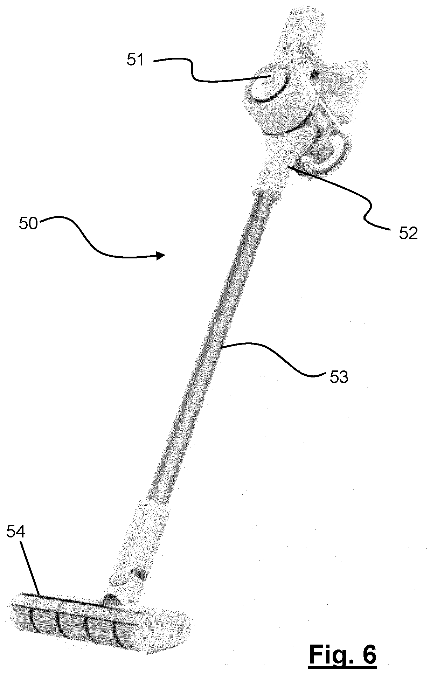

- Figure 6 is an exemplary image of a known electric cordless vacuum cleaner.

### DETAILED DESCRIPTION

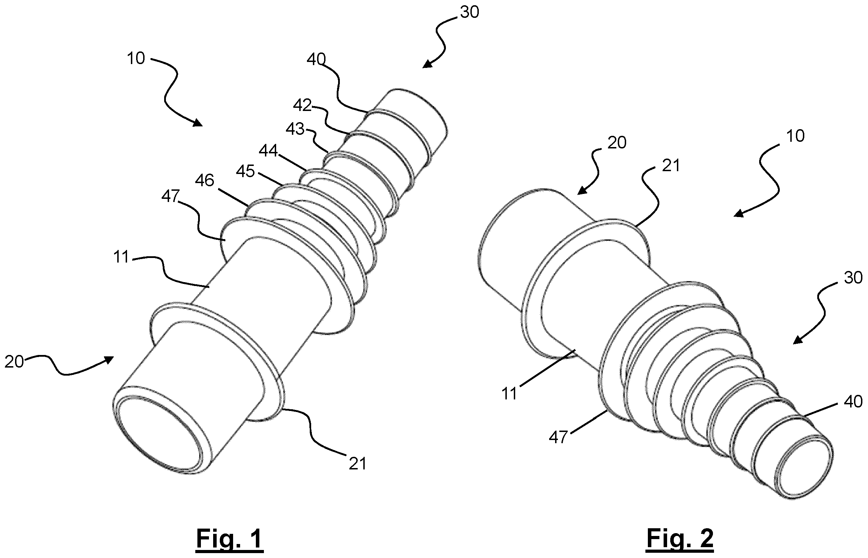

Figures 1-5 show an embodiment of an adapter device 10 of the invention.

The adapter device 10 comprises a hollow tubular body 11. Preferably, the hollow tubular body 11 is made at least partially of a deformable elastic return material. For example, it can be made of rubber, natural or synthetic, or of a thermoplastic elastomer (TPE), or of a thermoplastic polyurethane (TPU), or of polyvinyl chloride (PVC), or any combination thereof. For the purpose of the present description, the term "elastic return deformable material" means a material which can be deformed by a healthy adult using only one hand,. without excessive effort and which is able to return substantially to the original configuration at the end of the deformation in a few seconds or in any case within 300 seconds.

Preferably, the deformable elastic return material has a hardness of between about 40 Shore A and about 100 Shore A. More preferably, comprised between about 50 Shore A and about 90 Shore A. Even more preferably comprised between about 60 Shore A and about 80 Shore A. According to embodiments it is between about 65 Shore A and about 75 Shore A, for example about 70 Shore A.

The hollow tubular body 11 comprises a first end 20 configured to engage the main body 51 of a vacuum cleaner 50 and a second end 30 configured to engage an accessory or a hose.

The first end 20 is preferably substantially cylindrical or with a very low taper, mainly necessary for manufacturing reasons. Preferably it has a substantially circular cross-section. According to embodiments, the first end 20 may have a diameter of about 30-40 mm. Preferably, it has a diameter of about 33-37 mm and more preferably has a diameter of about 35 mm.

The second end 30 is preferably conical.

According to embodiments, the second end 30 has a single taper, i.e. it uniformly increases its diameter in the direction toward the first end 20.

According to other embodiments, the second end 30 has two different tapers, i.e. two sections can be identified in which the diameter increases differently in the direction toward the first end 20.

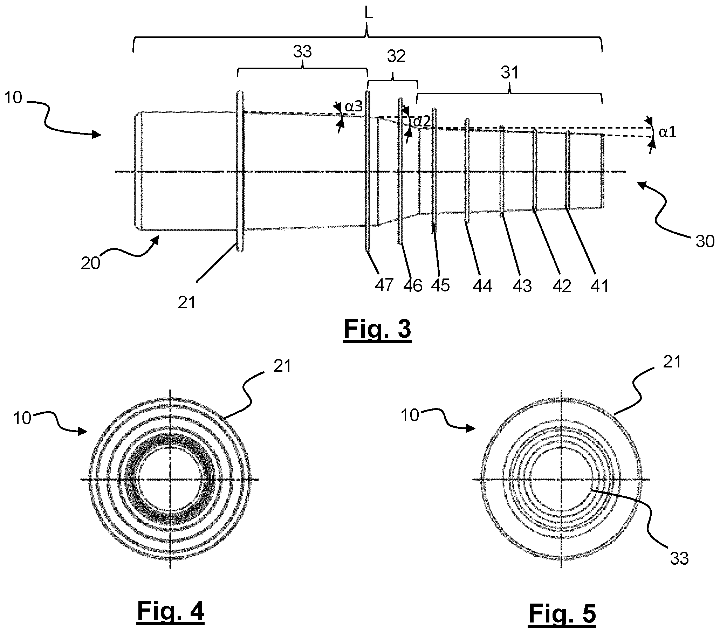

According to still other embodiments, the second end 30 has three different tapers, i.e. three sections 31, 32, 33 can be identified in which the diameter increases in a different way in the direction toward the first end 20. This embodiment is shown in particular in Figure 3.

According to other embodiments, the second end 30 has a taper number greater than three.

With reference to the various figures but in particular to Figure 3, the embodiment will be described in which the second end 30 comprises three sections, each with a different angle of taper. A first portion 31 has a diameter which increases with a first taper angle α1 (alpha 1) comprised between about 0° and about 5.5°, preferably comprised between about 1° and about 3.5°, more preferably comprised between about 1° and about 2.5°. According to embodiments, the first taper angle α1 is between about 1.5° and about 2°, for example 1.8°. A second section 32 (intermediate) has a diameter which increases with a second taper angle α2 (alpha two) comprised between about 7° and about 25°, preferably comprised between about 9° and about 22°, more preferably comprised between about 12° and about 20°. According to embodiments, the second taper angle α2 is comprised between about 14° and about 18°, for example 16°. A third section 33 has a diameter which increases with a third taper angle α3 (alpha three) comprised between about 0.5° and about 5°, preferably comprised between about 1° and about 4°, more preferably comprised between about 1° and about 3°. According to embodiments, the third taper angle α3 is comprised between about 1.5° and about 2.5°, for example 2°.

Preferably, the second taper angle α2 is greater than both the first taper angle α1 and the third taper angle α3. In turn, the first taper angle α1 is preferably greater than the third taper angle α3.

Preferably, the first section 31 of the second end 30 has a length greater than the second section 32 and the third section 33. Preferably, the second intermediate section 32 has a length less than the other two sections 31, 33.

The smaller diameter of the first section 31 can be about 20-25 mm, preferably about 21-24 mm and more preferably about 22 mm.

The hollow tubular body 11 can have a length L of about 100-200 mm, for example about 120-160 mm. Preferably it has a length of about 140 mm.

According to preferred embodiments, the hollow tubular body 11 comprises a plurality of sealing rings (41-47) projecting radially outward from the outer surface of the tubular body. Preferably, the sealing rings 41-47 have a substantially circular flattened shape. Preferably, the rings 41-47 are integral with the outer surface of the hollow tubular body.

According to the embodiment shown in the figures, the sealing rings 41-47 are substantially at 90° with respect to the axis of the tubular body. However, in other embodiments not shown, they could be inclined to form an angle greater than 90° or less than 90° to facilitate insertion or extraction.

Preferably, the first section 31 of the second end 30 comprises a plurality of rings 40-44 of uniformly increasing diameter and a ring 45 of greater diameter near the second portion 32.

Preferably, the second portion 32 of the second end 30 comprises a single ring 46, preferably about in the middle of the second portion 32.

Preferably, the third portion 33 of the second end 30 comprises a single ring 47, preferably close to the second portion 32.

Preferably, the rings of the three sections of the second end are substantially equally spaced apart.

Preferably, the rings 40-47 of the three sections 31-33 of the second end 30 have a thickness substantially equal to each other.

Preferably, a further sealing ring 21 or shoulder is provided between the first end 20 and the second end 30.

Preferably, the further sealing ring 21 has a diameter substantially equal to the diameter of the sealing ring 47 of the third section 33 but may have a greater thickness. This is because the further sealing ring 47 acts as a shoulder or abutment for the end edge of the flexible tube to which the adapter 10 is associated.

In use, therefore, the first end 20 of the adapter 10 according to the present invention is inserted into the end of a hose or an accessory. The second end 30 of the adapter 10 is instead inserted in the tube stump 52 of the main body 51 of the vacuum cleaner 50. Depending on the shape and size of the latter, only the first section 31, or the first section 31 and the second section 32 or all three sections 31-33 of the second end of the adapter 10 are inserted. The soft material of the adapter 10 allows it to adapt substantially to any shape and size of the tube 52 of the main body 51. The rings 40-47 projecting from the outer surface of the cylindrical body 11 advantageously act as a plug, i.e. they form an air seal and therefore considerably limit the load losses, maintaining the suction efficiency substantially at the nominal value.

The adapter 10 according to the present invention may be provided as a separate piece, may be provided in association with the vacuum cleaner 50 or may be part of a kit. The kit may comprise the adapter 10 and one or more of the following parts: A hose, a rigid nozzle, a brush, a rigid bend, a suction head or a pet grooming brush.

The adapter 10 of the present invention is particularly suitable to be used in association with a wireless electric vacuum cleaner 50 (also called "electric broom") but it can also be used for other vacuum cleaners. In particular, it can be used to connect the rigid nozzle of an industrial vacuum cleaner installed in a car wash or in a gas station to his/her own accessory or to his/her own hose. This makes it possible to use the industrial car wash vacuum cleaner better, more efficiently and more hygienically. In fact, the flexible tube and the rigid nozzle of an industrial vacuum cleaner installed in a car wash is used by a plurality of people, generally without great care by the users, to suck also earth, stones, oil and liquids of various types, ... The use of the nozzle and of the hose provided to the industrial vacuum cleaner is therefore anti-hygienic and risks to render more dirty the interior of the vehicle.

The adapter 10 of the present invention allows to connect to the rigid nozzle or to the hose provided in the car wash a hose and/or an accessory thereof (for example of the above kit). The hose and accessories of the user are certainly cleaner and hygienically safer. Once the work is complete, it is sufficient to detach the adapter 10 and his/her own hose or his/her own accessory.

## Claims

1. An adapter device (10) for a vacuum cleaner (50) comprising a hollow tubular body (11) comprising a first end (20) configured to engage a part of the vacuum cleaner (50) and a second end (30) configured to engage an accessory or a flexible tube, wherein said hollow tubular body (11) is at least partially of a deformable material with elastic return **characterized in that** said tubular body comprises a plurality of rings (40-47) protruding radially outwards from the external surface of the tubular body (11), wherein the rings (40-70) of the plurality of rings (40-70) have an increasing diameter.

2. The adapter device (10) of claim 1, wherein the rings (40-70) of the plurality of rings (40-70) have a substantially circular shape.

3. The adapter device (10) of claim 1, wherein said first end (20) is substantially cylindrical with a substantially circular section.

4. The adapter device (10) of claim 1, wherein said second end (30) is at least partially conical.

5. The adapter device (10) of claim 4, wherein said second end (30) which is at least partially conical comprises three substantially conical sections (31, 32, 33).

6. The adapter device (10) of claim 5, wherein said substantially conical sections (31, 32, 33) have different taper angles (α1, α2, α3).

7. The adapter device (10) of any of the preceding claims, wherein the adapter device (10) is made at least partially of a material chosen from the group comprising: natural rubber, synthetic rubber, thermoplastic elastomer, thermoplastic polyurethane, polyvinyl chloride, or any combination thereof.

8. A vacuum cleaner comprising an adapter device (10) according to claim 1, wherein said vacuum cleaner is a cordless electric vacuum cleaner (50) or an industrial vacuum cleaner for gas stations or car washes.

9. A kit of parts comprising an adapter device (10) according to any of claims 1-7 and one or more of the following parts: a flexible tube, a rigid nozzle, a brush, a rigid curve, a suction head, a pet grooming tool.

## Patentansprüche

1. Adaptervorrichtung (10) für einen Staubsauger (50) mit einem hohlen rohrförmigen Körper (11), der ein erstes Ende (20) aufweist, das ausgebildet ist, um einen Teil des Staubsaugers (50) in Eingriff zu bringen, und ein zweites Ende (30), das ausgebildet ist, um ein Zubehörteil oder einen flexiblen Schlauch in Eingriff zu bringen, wobei der hohle rohrförmige Körper (11) zumindest teilweise aus einem verformbaren Material mit elastischer Rückstellung besteht, **dadurch gekennzeichnet, dass** der rohrförmige Körper eine Vielzahl von Ringen (40-47) aufweist, die von der Außenfläche des rohrförmigen Körpers (11) radial nach außen vorstehen, wobei die Ringe (40-70) der Vielzahl von Ringen (40-70) einen zunehmenden Durchmesser aufweisen.

2. Adaptervorrichtung (10) nach Anspruch 1, wobei die Ringe (40-70) der Vielzahl von Ringen (40-70) eine im Wesentlichen kreisförmige Form aufweisen.

3. Adaptervorrichtung (10) nach Anspruch 1, wobei das erste Ende (20) im Wesentlichen zylindrisch mit einem im Wesentlichen kreisförmigen Querschnitt ist.

4. Adaptervorrichtung (10) nach Anspruch 1, wobei das zweite Ende (30) zumindest teilweise konisch ist.

5. Adaptervorrichtung (10) nach Anspruch 4, wobei das zweite Ende (30), das zumindest teilweise konisch ist, drei im Wesentlichen konische Abschnitte (31, 32, 33) aufweist.

6. Adaptervorrichtung (10) nach Anspruch 5, wobei die im Wesentlichen konischen Abschnitte (31, 32, 33) unterschiedliche Kegelwinkel (α1, α2, α3) aufweisen.

7. Adaptervorrichtung (10) nach einem der vorhergehenden Ansprüche, wobei die Adaptervorrichtung (10) zumindest teilweise aus einem Material hergestellt ist, das ausgewählt ist aus der Gruppe bestehend aus: Naturkautschuk, synthetischem Kautschuk, thermoplastisches Elastomer, thermoplastisches Polyurethan, Polyvinylchlorid oder irgendeiner Kombination davon.

8. Staubsauger mit einer Adaptervorrichtung (10) nach Anspruch 1, wobei der Staubsauger ein schnurloser Elektrostaubsauger (50) oder ein Industriestaubsauger für Tankstellen oder Autowaschanlagen ist.

9. Teilesatz mit einer Adaptervorrichtung (10) nach irgendeinem der Ansprüche 1 bis 7 und einem oder mehreren der folgenden Teile: ein flexibles Rohr, eine starre Düse, eine Bürste, ein starrer Bogen, ein Saugkopf, ein Haustier-Fellpflegegerät.

## Revendications

1. Dispositif adaptateur (10) pour un aspirateur (50) comprenant un corps tubulaire creux (11) comprenant une première extrémité (20) configurée pour mettre en prise une partie de l'aspirateur (50) et une seconde extrémité (30) configurée pour mettre en prise un accessoire ou un tube flexible, dans lequel ledit corps tubulaire creux (11) est au moins partiellement réalisé avec un matériau déformable avec un retour élastique, **caractérisé en ce que** ledit corps tubulaire comprend une pluralité de bagues (40-47) faisant radialement saillie vers l'extérieur à partir de la surface externe du corps tubulaire (11), dans lequel les bagues (40-70) de la pluralité de bagues (40-70) ont un diamètre croissant.

2. Dispositif adaptateur (10) selon la revendication 1, dans lequel les bagues (40-70) de la pluralité de bagues (40-70) ont une forme sensiblement circulaire.

3. Dispositif adaptateur (10) selon la revendication 1, dans lequel ladite première extrémité (20) est sensiblement cylindrique avec une section sensiblement circulaire.

4. Dispositif adaptateur (10) selon la revendication 1, dans lequel ladite seconde extrémité (30) est au moins partiellement conique.

5. Dispositif adaptateur (10) selon la revendication 4, dans lequel ladite seconde extrémité (30) qui est au moins partiellement conique comprend trois sections sensiblement coniques (31, 32, 33).

6. Dispositif adaptateur (10) selon la revendication 5, dans lequel lesdites sections sensiblement coniques (31, 32, 33) ont des angles de conicité (α1, α2, α3) différents.

7. Dispositif adaptateur (10) selon l'une quelconque des revendications précédentes, dans lequel le dispositif adaptateur (10) est réalisé au moins partiellement avec un matériau choisi dans le groupe comprenant : le caoutchouc naturel, le caoutchouc synthétique, un élastomère thermoplastique, un polyuréthane thermoplastique, du polychlorure de vinyle ou l'une quelconque de leurs combinaisons.

8. Aspirateur comprenant un dispositif adaptateur (10) selon la revendication 1, dans lequel ledit aspirateur est un aspirateur électrique sans fil (50) ou un aspirateur industriel pour les stations-services ou les stations de lavage.

9. Kit de pièces comprenant un dispositif adaptateur (10) selon l'une quelconque des revendications 1 à 7, et une ou plusieurs des pièces suivantes : un tube flexible, une buse rigide, une brosse, une courbe rigide, une tête d'aspiration, un outil de toilettage pour animaux de compagnie.
